## Europäisches Patentamt

## European Patent Office

## Office européen des brevets

(19)

(11) Veröffentlichungsnummer: **0 305 699**
**B1**

(12) **EUROPÄISCHE PATENTSCHRIFT**

(45) Veröffentlichungstag der Patentschrift:
**03.10.90**

(21) Anmeldenummer: **88111272.6**

(22) Anmeldetag: **14.07.88**

(51) Int. Cl.⁵: **B29C 49/68, B29C 49/42**

(54) Einrichtung zum drehbaren Transportieren von Vorformlingen durch eine Aufheizstation zu einer Streckblasmaschine.

(30) Priorität: **03.09.87 DE 3729452**

(43) Veröffentlichungstag der Anmeldung:
**08.03.89 Patentblatt 89/10**

(45) Bekanntmachung des Hinweises auf die Patenterteilung:
**03.10.90 Patentblatt 90/40**

(84) Benannte Vertragsstaaten:
**AT CH DE FR GB IT LI NL SE**

(56) Entgegenhaltungen:
**FR-A- 2 319 476**
**GB-A- 2 020 614**
**GB-A- 2 097 322**
**US-A- 4 313 720**
**US-A- 4 337 633**
**US-A- 4 522 581**
**US-A- 4 629 389**

(73) Patentinhaber: **HERMANN BERSTORFF Maschinenbau GmbH, An der Breiten Wiese 3/5, D-3000 Hannover 61(DE)**

(72) Erfinder: **Voss, Hermann, Greevenbrook 36, D-2105 Seevetal 2(DE)**
Erfinder: **Mank, Manfred, Dr. Dipl.-Ing., im Kohlhof 15, D-2000 Hamburg 65(DE)**

## Beschreibung

Die Erfindung betrifft eine Einrichtung, gemäß dem Oberbegriff des Patentanspruchs 1.

Bei einer derartigen Einrichtung (US-PS 43 82 760) ist bekannt eine Aufnahmekette vorzusehen, in die von oben in kreisförmige in ihrem Durchmesser nicht verstellbare Öffnungen die aufzuheizenden Vorformlinge eingegeben und mit der diese dann durch die Streckblasmaschine transportiert werden.

Die bekannte Einrichtung hat den Nachteil, daß nur eine bestimmte Behälter- oder Flaschengröße damit herstellbar ist, weil in die Aufnahmeeinrichtung der Kette nur ein Vorformling mit einem bestimmten Durchmesser hineinpaßt und durch die Heizeinrichtung transportiert werden kann.

Es ist die Aufgabe der Erfindung, eine Einrichtung für den Transport von Vorformlingen durch eine Aufheizstation zu einer Streckblasmaschine zu schaffen, die eine absolut gleichmäßige Aufheizung der Vorformlinge gewährleistet, um daraus Hohlkörper mit sehr gleichmäßiger Wanddicke herstellen zu können, wobei die Einrichtung schnell und einfach an unterschiedliche Vorformlingsgrößen anpaßbar sein soll.

Diese Aufgabe wird durch die im kennzeichnenden Teil des Patentanspruch 1 beschriebenen Merkmale gelöst.

Durch die Anordnung von zwei gleichsinnig parallel zueinander verlaufenden, gegenläufig antreibbaren Mitnahmetrums, die durch endlose Zahnriemen gebildet werden, an die Tragringe für die Vorformlinge angeordnet sind, mit einer dazwischen liegenden, hinsichtlich der Breite zusammen mit Heizeinrichtungen verstellbaren linearen Transportstrecke, kann eine gezielte Aufheizung der Vorformlinge erfolgen. Der gleichmäßige Aufheizvorgang wird verbessert durch eine ständige Rotation der Vorformlinge während ihres Durchlaufs durch die Heizstation.

An den beiden endlosen Zahnriemen sind Aufnahmeeinrichtungen befestigt, die von beiden Trums ausgehend zur Mitte der Transportstrecke zeigend die Vorformlinge zwischen sich aufnehmen, wobei die Aufnahmeeinrichtungen in vorteilhafter Weise gebildet werden durch an Laschen befestigte Tragrollen, an die ein vorstehender Tragring angeordnet ist. Der Stützring des Vorformlings liegt jeweils auf zwei sich gegenüberliegenden an den Tragrollen angeformten Tragringen auf, wodurch ein sehr stabiler und störungsfreier Transport (auch mit hoher Geschwindigkeit) durch die Aufheizstation sichergestellt wird.

Die Laschen sind über Halterungen an die endlosen Mitnahmetrums befestigt. An den Laschen sind an dem einen von den Vorformlingen abgewandten Ende in Führungsschienen laufende Führungsrollen, und an dem anderen Ende die Achsen der nach unten hängenden Tragrollen befestigt. Im unteren Teil der Tragrollen ist bei einem Ausführungsbeispiel neben dem angeformten Tragring eine runde umlaufende Ringnut eingeformt.

In die Ringnut der Tragrolle läuft jeweils ein endloser, im Querschnitt rund ausgebildeter Antriebsriemen, der mit einem stufenlos regelbaren Antrieb in Verbindung steht. Alternativ kann auch ein Zahnriemen hierfür eingesetzt werden. Durch diesen Antrieb kann die Tragrolle mit stufenloser Umfangsschwindigkeit in Drehbewegung gesetzt werden, die sich auf den Vorformling überträgt, so daß der Vorformling in rotierender Weise durch die Aufheizeinrichtung läuft.

Durch die Rotation des Vorformlings während seines Durchlaufs durch die Heizeinrichtung, wird eine Vergleichmäßigung der Temperatur des Vorformlings erreicht.

Um unterschiedlich in ihrem Durchmesser bemessene Vorformlinge aufheizen zu können, ist die Breite der Transportstrecke zwischen den einzelnen Tragrollen stufenlos einstellbar. Zu diesem Zweck ist waagerecht und quer zur Durchlaufrichtung der Zahnriementrums wenigstens ein Spindeltrieb auf den die Zahnriementrums aufnehmenden Trägern angeordnet und mit diesen verschraubt.

Der Spindeltrieb ist mittels einer auf der einen Spindelseite aufgesetzter Handkurbel betätigtbar, wodurch die Breite der Transportstrecke stufenlos einstellbar ist durch die Anordnung eines Linksgewindes auf der einen Spindelhälfte und eines Rechtsgewindes auf der anderen Spindelhälfte.

An den Träger sind in vorteilhafter Weise auch die Heizeinrichtungen, z.B. Keramikstrahler, befestigt, so daß der Abstand der Heizeinrichtungen zum Vorformling auch bei Vorformlingen mit größerem oder kleinerem Durchmesser immer gleich bleibt, was ebenfalls zur Vergleichmäßigung der Wandtemperatur (auch bei unterschiedlichen Vorformlingen) beiträgt.

Nachfolgend werden anhand der Zeichnungen zwei bevorzugte Ausführungsbeispiele der erfindungsgemäßen Einrichtung erläutert.

Es zeigen:

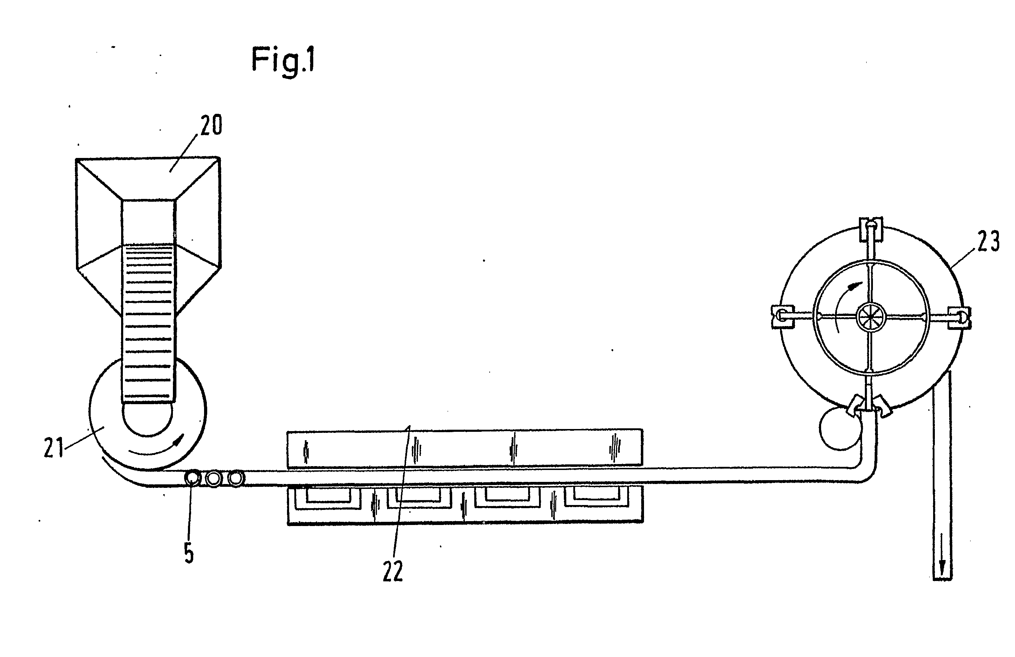

Fig. 1 eine schematische Draufsicht auf eine Anlage zum kontinuierlichen Streckblasen von Flaschen mit einer Einrichtung zum Transportieren von Vorformlingen durch eine Aufheizstation,

Fig. 2 eine Draufsicht auf die Einrichtung zum Transportieren gem. Fig 1 in größerer Darstellung

Fig. 3 einen Querschnitt durch die Einrichtung gem. Fig 2 etwa entlang der Linie III - III in grösserer Darstellung und

Fig. 4 einen Querschnitt durch die Einrichtung gem. dem zweiten Ausführungsbeispiel ähnlich der Ausführungsform nach Fig. 3.

In einen Steilförderer 20 werden die spritzgegossenen Vorformlinge einem Sortierer 21 zugeführt, der die Vorformlinge 5 einer Heizstation 22 zuführt. Nach dem Aufheizen werden die Vorformlinge einer Streckblasmaschine 23 zugeführt.

Die Heizstation 22 weist zwei gegenläufige endlose Zahnriemen 1, 2 mit Mitnahmetrums 1a und 2a auf, die um angetriebene Umlenkräder 30, 31 laufen.

Mittels eines beidseitig verzahnten Riemens 32 und zwei kleineren Umlenkrollen 33 wird erreicht, daß die Umlenkrollen 30 und 31 gegenläufig und synchron umlaufen. Die Umlenkrolle 31 wird über einen Keilriemen 34 und durch den nicht näher gezeigten Antrieb 35 angetrieben, der ebenfalls stufenlos regelbar ausgebildet ist.

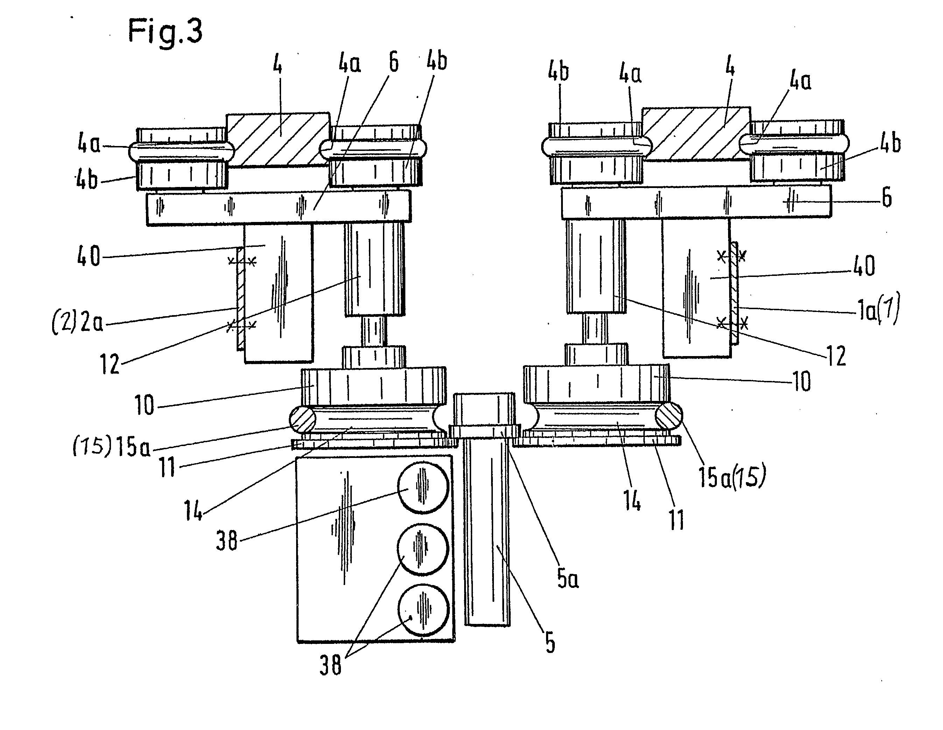

An die endlosen Zahnriemen 1, 2 (Fig. 3) sind Halterungen 40 angebolzt, an die oben eine Lasche 6 befestigt ist. An der Lasche 6 sind in einer Führungsnut 4a laufende Führungsrollen 4b und auf einer Seite die Tragrollenachse 12 befestigt. Die Tragrolle 10 sitzt am unteren Ende der Achse 12 und weist einen überstehenden, umlaufenden Tragring 11 auf für die Aufnahme des Stützringes 5a des Vorformlings 5.

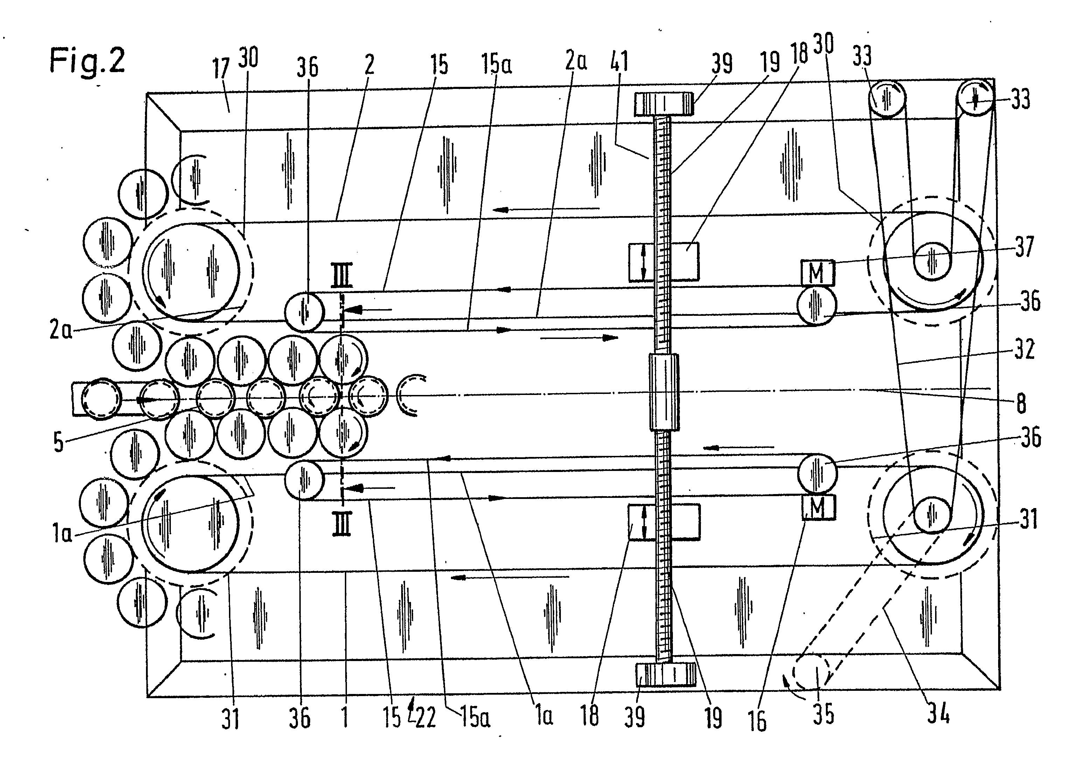

Oberhalb des an die Tragrolle 10 angeformten Trangringes 11 ist eine Ringnut 14 in die Tragrolle eingeformt, in der ein endloser, im Querschnitt runder Treibriemen 15 läuft, wodurch die Tragrolle 10 in Drehbewegung gehalten wird, die sich auf den Vorformling 5 überträgt. Die endlosen Treibriemen 15, mit ihren Mitnahmetrums 15a werden über Umlenkrollen 36 (Fig. 2) gespannt und durch die stufenlosen und synchronisierten Antriebe 16 und 37 angetrieben.

Durch die Antriebe 16 und 37 wird die Umfangsgeschwindigkeit der Vorformlinge 5, während diese durch die Heizstation 22 laufen, gezielt eingestellt, wodurch auf die Temperaturver gleichmäßigung der Vorformlinge 5 Einfluß genommen werden kann.

Um die Breite der linearen Transportstrecke 8 für eine Aufheizung von Vorformlingen 5 unterschiedlichen Durchmessers, einstellen zu können, werden ein oder auch mehrere, nebeneinander angeordnete Spindeltriebe 41 vorgesehen, die auf dem Grundrahmen 17 montiert sind.

Beide Zahnriemen 1, 2 mit den Umlenkrollen 30, 31 sowie die die Umlenkrollen 36 für die Treibriemen 15 und die Heizstrahler 38 der Heizeinrichtung 3 sind auf einen teilweise dargestellten Grundrahmen 17 befestigt, auf dem auch die Führungen 18 des Spindeltriebes 19 geschraubt sind.

Wenn die Spindel 19 mittels der Handräder 39 gedreht wird, überträgt sich eine axiale Bewegung auf die Führungen 18, die somit durch das auf der einen Spindelhälfte angeordnete Linksgewinde und auf der anderen Spindelhälfte angeordnete Rechtsgewinde entweder gemeinsam voneinander weg bewegt oder bei einer Drehrichtungsumkehr aufeinander zu bewegt werden, wodurch die Breite der Transportstrecke 8 stufenlos eingestellt werden kann.

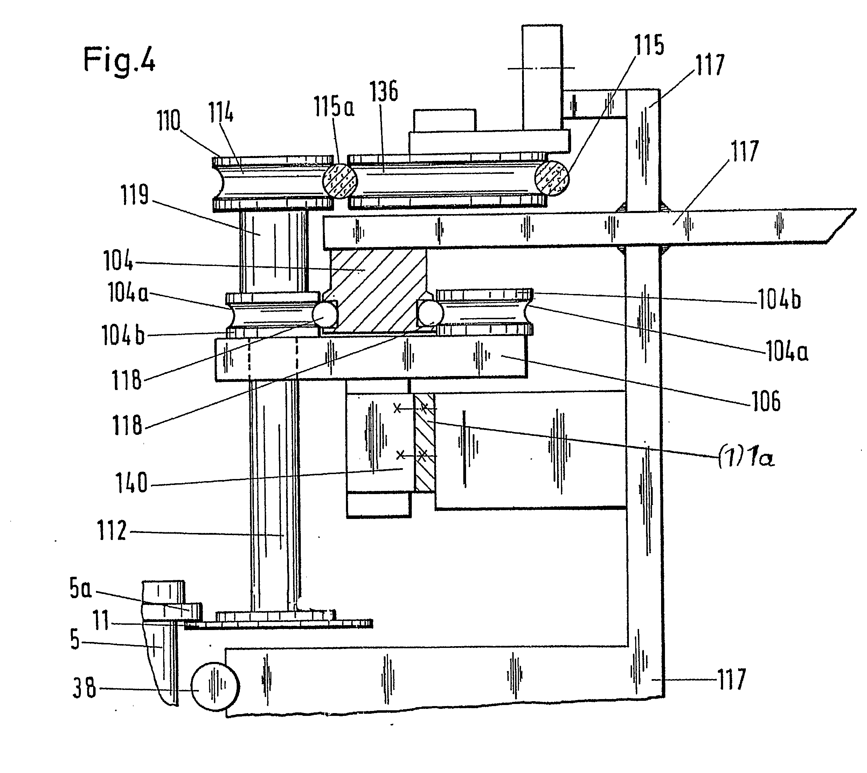

In dem zweiten Ausführungsbeispiel gem. Fig 4 ist an dem Träger 117 unten eine Führungsschiene 104 befestigt mit beidseitig in eine Nut eingesetzten, metallischen Rundstäben 118. Auf den Rundstäben 118 laufen Führungsrollen 104b mit Führungsnuten 104a, die auf einer Lasche 106 befestigt sind. An dem einen Ende der Lasche 106 unten ist die Tragrollenachse 112 befestigt. An den anderen Enden an der Oberseite der Lasche 106 ist je eine Führungsrolle 104b angeordnet, so daß eine sehr exakte Führung erreicht wird.

Die Tragrollenachse 112 weist an ihrem unteren Ende eine Tragrolle mit einem daran angeformten Tragring 11 für die Aufnahme des Stützringes 5a des Vorformlings 5 auf.

An der Oberseite der Tragrollenachse 112 oberhalb der Lasche 106 und der Führungsrolle 104b ist ein Wellenstumpf 119 befestigt, an der eine Antriebsrolle 110 mit einer Ringnut 114 angeordnet ist.

In diese Ringnut 114 läuft ein runder endloser Treibriemen 115, der über Umlenkrollen 136, ähnlich den Umlenkrollen 36 in Fig. 2, umläuft, durch Antriebe angetrieben wird und somit den Wellenstumpf 119, die Tragrollenachse 112 und die Tragrolle mit dem Tragring 11 in Drehbewegung versetzt. Diese Drehbewegung überträgt sich auf den Vorformling 5, der zwecks Vergleichmäßigung seiner Temperatur durch die Heizstation 22 geführt wird, wobei die Rotationsgeschwindigkeit beliebig durch die stufenlose Verstellung der Drehzahl der jeweiligen Antriebe eingestellt werden kann.

Durch eine derartige Anordnung ist die Rolle 110 mit der Ringnut 114 und der endlose Antriebsriemen 115 weit entfernt von den Heizstrahlern 38 angeordnet, so daß im Störungsfall die endlosen Triebriemen 115 nicht übermäßig erhitzt werden.

**Bezugszeichenliste :**

1 = Zahnriemen
1a = Mitnahmetrum
2 = Zahnriemen
2a = Mitnahmetrum
3 = Heizeinrichtung
4 = Führungsschiene
4a = Führungsnuten
4b = Führungsrolle
5 = Vorformling
5a = Stützring
6 = Laschen
8 = Transportstrecke
10 = Antriebsrolle
11 = Tragring
12 = Tragrollenachse
14 = Ringnut
15 = Treibriemen
15a = Mitnahmetrum
16 = Antrieb
17 = Grundrahmen
18 = Führungen
19 = Spindel
20 = Steilförderer
21 = Sortierer
22 = Heizstation
23 = Blasrad
30 = Umlenkrollen
31 = Umlenkrollen
32 = Riemen
33 = Umlenkrollen
34 = Keilriemen
35 = Antrieb
36 = Umlenkrollen
37 = Antrieb
38 = Heizstrahler
39 = Handräder
40 = Halterungen
41 = Spindeltrieb
104 = Führungsschiene
104a = Führungsnuten
104b = Führungsrolle
106 = Laschen
110 = Antriebsrolle

112 = Tragrollenachse
114 = Ringnut
115 = Treibriemen
115a = Mitnahmetrum
117 = Grundrahmen
118 = Rundstäbe
119 = Wellenstumpf
136 = Umlenkrollen

**Patentansprüche**

1. Einrichtung zum drehbaren Transportieren von einen Stützring (5a) aufweisenden Vorformlingen (5) durch eine Aufheizstation (22) zu einer Streckblasmaschine (23) für die Herstellung von Hohlkörpern aus thermoplastischem Kunststoff, mit einem Gehäuse und einer darin angeordneten Transporteinrichtung, deren linearer, waagerechter Transportstrecke (8) eine Heizung zugeordnet ist,

**dadurch gekennzeichnet,**

daß die Transportstrecke (8) aus zwei gleichsinnig parallel zueinander verlaufenden, in ihrem gegenseitigen Abstand zusammen mit ihrer zugeordneten Heizeinrichtung (38) einstellbaren Mitnahmetrums (1a, 2a) von zwei zusammenwirkenden, gegenläufig antreibbaren endlosen Zahnriemen (1, 2) gebildet ist, daß an den Zahnriemen (1, 2) Tragringe (11) für die Vorformlinge (5) angeordnet sind, wobei jeder der Vorformlinge (5) an seinem Stützring (5a) von jeweils zwei der Tragringe (11) jedes der beiden Zahnriemen (1, 2) getragen wird, und daß die Tragringe (11) der beiden Zahnriemen (1, 2) durch parallel zu den Mitnahmetrums (1a, 2a) der Zahnriemen (1, 2) zueinander gegenläufig verlaufende Mitnahmetrums (15a, 15b) von zwei gleichsinnig antreibbaren endlosen Treibriemen (15 bzw. 115) drehbar sind, deren Antriebsgeschwindigkeit einstellbar ist und die an einer mit jedem der Tragringe (11) verbundenen Antriebsrolle (10 bzw. 110) angreifen.

2. Einrichtung nach Anspruch 1,

**dadurch gekennzeichnet,**

daß der gegenseitige Abstand der Mitnahmetrums (1a, 2a) durch wenigstens einen, waagerecht und quer zur Laufrichtung der Mitnahmetrums (1a, 2a) angeordneten, und an dem Grundrahmen (17) der Einrichtung angreifenden Spindeltrieb (41) einstellbar ist.

3. Einrichtung nach Anspruch 1,

**dadurch gekennzeichnet,**

daß die Anordnung der Tragringe (11) an den Zahnriemen (1, 2) mittels an diesen befestigten Halterungen (40 bzw. 140), denen mittig an ihrer Oberseite Laschen (6 bzw. 106) zugeordnet sind, gebildet ist, daß an dem einen, von den Vorformlingen (5) abgewandten Ende jeder der Laschen (6 bzw. 106) in Führungsnuten (4a bzw. 104a) einer Führungsschiene (4) laufende Führungsrollen (4b bzw. 104b) angeordnet sind, und daß an dem gegenüberliegenden Ende jeder der Laschen (6, 106) die Achse (12 bzw. 112) einer Tragrolle (10 bzw. 110) befestigt ist.

4. Einrichtung nach einem der Ansprüche 1 - 3,

**dadurch gekennzeichnet,**

daß jede der Antriebsrollen (10, 110) eine Ringnut (14 bzw. 114) aufweist, in die der im Querschnitt rund ausgebildete Treibriemen (15 bzw. 115), eingreift.

5. Einrichtung nach einem der Ansprüche 1 - 4,

**dadurch gekennzeichnet,**

daß die Antriebseinrichtung (110, 114, 115, 119) für die Drehbewegung des Vorformlings oberhalb der endlosen Zahnriemen (102) (Fig 4) angeordnet ist.

**Claims**

1. Apparatus for rotatably conveying preforms (5), [each] including a support ring (5a), through a heating station (22) to a stretching and blowing machine (23) for the production of hollow bodies formed from thermoplastic plastics material, [said conveying apparatus] comprising a housing and a conveyor means disposed therein, a heating device being associated with the linear, horizontal conveyor path (8) of said conveyor means, characterised in that the conveyor path (8) is formed from two carrier surfaces (1a, 2a) of two co-operating, endless toothed belts (1, 2), which are drivable in opposite directions to one another, the carrier surfaces extending parallel to one another in the same direction and being adjustable, in respect of their mutual spacing from one another, together with their associated heating element (38), in that bearing rings (11) for the preforms (5) are disposed on the toothed belts (1, 2), each of the preforms (5) being supported on its support ring (5a) by two of the bearing rings (11) of each of the two toothed belts (1, 2), and in that the bearing rings (11) of the two toothed belts (1, 2) are rotatable by means of carrier surfaces (15a, 15b) of two endless drive belts (15 or 115), which are drivable in the same direction, said carrier surfaces extending in opposite directions to one another parallel to the carrier surfaces (1a, 2a) of the toothed belts (1, 2), the driving speed of said drive belts being adjustable, and said drive belts cooperate with a drive roller (10 or 110) connected to each of the bearing rings (11).

2. Apparatus according to claim 1, characterised in that the mutual spacing of the carrier surfaces (1a, 2a) from one another is adjustable by at least one spindle drive means (41), which extends horizontally and at right angles to the direction of travel of the carrier surfaces (1a, 2a) and co-operates with the basic frame (17) of the apparatus.

3. Apparatus according to claim 1, characterised in that the bearing rings (11) are disposed on the toothed belts (1, 2) by means of retaining members (40 or 140), which are mounted thereon and have associated lugs (6 or 106) disposed centrally on their upper surface, in that guide rollers (4b or 104b), which run in guide grooves (4a or 104a) provided in a guide rail (4), are disposed on the end of each of the lugs (6 or 106) remote from the preforms (5), and in that the axle (12 or 112) of the bearing roller (10 or 110) is mounted on the opposite end of each of the lugs (6, 106).

4. Apparatus according to one of claims 1–3, characterised in that each of the drive rollers (10, 110) has an annular groove (14 or 114), in which engages the drive belt (15 or 115) which has a circular cross-section.

5. Apparatus according to one of claims 1–4, characterised in that the driving arrangement (110, 114, 115, 119) for the rotational movement of the preform is disposed above the endless toothed belts (102) (Fig. 4).

**Revendications**

1. Dispositif de transport d'ébauches (5) animées d'un mouvement de rotation, à travers un poste de chauffage (22), et comportant un anneau d'appui (5a), vers une machine de moulage par étirage-soufflage (23) pour fabriquer des corps creux en matière plastique thermoplastique, comprenant un bâti et un dispositif de transport qui y est monté et dont la zone de transport linéaire et horizontale (8) est associée à un dispositif de chauffage caractérisé, en ce que la zone de transport (8) est formée de deux brins d'entraînement (1a, 2a) s'étendant dans le même sens parallèlement l'un à l'autre et dont la distance mutuelle, avec leur dispositif de chauffage (38) associé, est réglable, de deux courroies dentées (1, 2) sans fin, qui coopèrent et qui peuvent être entraînées en sens inverse, en ce que sur les courroies dentées (1, 2) sont prévus des anneaux de support (11) des ébauches (5), chacune des ébauches (5) étant portée par son anneau d'appui (5a) par deux des anneaux de support (11) de chacune des deux courroies dentées (1, 2) et en ce que les anneaux de support (11) des deux courroies dentées (1, 2) peuvent être entraînés en rotation par des brins d'entraînement (15a, 15b) s'étendant, en sens opposé l'un de l'autre, parallèlement aux brins d'entraînement (1a, 2a) des courroies dentées (1, 2) de deux courroies d'entraînement (15 et 115) sans fin, pouvant être entraînées dans le même sens, dont la vitesse d'entraînement peut être réglée et qui attaquent un rouleau d'entraînement (10 et 110) relié à chacun des anneaux de support (11).

2. Dispositif selon la revendication 1, caractérisé, en ce que la distance mutuelle des brins d'entraînement (1a, 2a) peut être réglée par au moins un dispositif de poussée à broche, disposé horizontalement et transversalement à la direction de déplacement des brins d'entraînement (1a, 2a) et attaquant le bâti d'ensemble (17) du dispositif.

3. Dispositif selon la revendication 1, caractérisé, en ce que le montage des anneaux de support (11) sur les courroies dentées (1, 2) est formé au moyen de dispositifs de fixation (40 et 140) fixés à celles-ci et auxquelles sont associés au milieu de leur face supérieure des couronnes (6 et 16), en ce qu'à l'une des extrémités éloignées des ébauches (5) de chacun des couronnes (6 et 106) sont montés, dans des gorges de guidage (4a et 104a) d'un rail de guidage (4), des galets de guidage (4b et 104b) fous et en ce qu'à l'extrémité opposée de chaque couronne (6, 106) est fixé l'axe (12 et 112) d'un rouleau-support (10 et 110).

4. Dispositif selon l'une des revendications 1 à 3, caractérisé en ce que chacun des rouleaux d'entraînement (10, 110) comporte une gorge annulaire (14 et 114) dans laquelle pénètre la courroie d'entraînement (15 et 115) de section transversale arrondie.

5. Dispositif selon l'une des revendications 1 à 4, caractérisé en ce que le dispositif d'entraînement (110, 114, 115, 119) pour le mouvement de rotation de l'ébauche est disposé au-dessus des courroies dentées (102) sans fin (figure 4).

Fig.1

EP 0 305 699 B1

Fig.2

EP 0 305 699 B1

Fig.3

EP 0 305 699 B1

Fig.4